# EUROPÄISCHE PATENTSCHRIFT

(11) **EP 2 435 205 B1**
(45) Veröffentlichungstag und Bekanntmachung des Hinweises auf die Patenterteilung: **06.07.2016**
(21) Anmeldenummer: 10722565.8
(22) Anmeldetag: 08.05.2010
(51) Int. Cl.: B23H 3/04, B23H 3/10

(54) **ELEKTRODE ZUR ELEKTROCHEMISCHEN BEARBEITUNG EINES WERKSTÜCKS**
ELECTRODE FOR THE ELECTROCHEMICAL MACHINING OF A WORKPIECE
ELECTRODE D'USINAGE ÉLECTROCHIMIQUE D'UNE PIÈCE

(30) Priorität: 27.05.2009 DE 102009022926
(43) Veröffentlichungstag der Anmeldung: 04.04.2012
(73) Patentinhaber: MTU Aero Engines AG, 80995 München (DE)
(72) Erfinder: PLATZ, Albin, 86510 Ried-Baindlkirch (DE); HUTTNER, Roland, 82287 Jesenwang (DE); BURGER, Matija, 81379 München (DE)
(86) Internationale Anmeldenummer: PCT/DE2010/000520
(87) Internationale Veröffentlichungsnummer: WO 2010/136009

(56) Entgegenhaltungen:
- DE-A1-102006 045 664
- JP-A- 56 027 732
- US-A- 3 041 264
- US-A- 3 433 727
- US-A- 3 511 767
- THE CINCINNATI MACHINE CO.: "Outillage pout l'usinage électrochimique" MACHINE MODERNE, 1. November 1969 (1969-11-01), Seiten 51-56, XP002599696

## Beschreibung

Die Erfindung betrifft eine Elektrode zur elektrochemischen Bearbeitung eines Werkstücks. Eine derartige Elektrode ist aus US3041265 bekannt.

Ein Verfahren zum exakten und sehr präzisen Herstellen von Oberflächen stellt das elektrochemische Bearbeiten dar. Beim elektrochemischen Bearbeiten wird in der Regel mit einer Elektrode die Oberfläche eines Werkstücks bearbeitet, wobei durch elektrochemische Reaktion des Werkstücks mit einem sich zwischen Werkstück und Elektrode befindlichen Elektrolyt ein Abtrag von Material am Werkstück erfolgt. Bei üblichen Vorgängen des elektrochemischen Bearbeitens wird mit Abständen von der Elektrode zum Werkstück gearbeitet, die im Bereich von 1 bis 2 mm liegen können. Zum Erzeugen feinerer Strukturen und Formen kann der Abstand auf Größen im Bereich von 10 bis 50 Mikrometer und darunter abgesenkt werden.

Durch die elektrochemische Reaktion und den Materialabtrag wird der Elektrolyt verunreinigt, beispielsweise durch Metallionen des Werkstoffmaterials. Der Elektrolyt im Spalt zwischen Elektrode und Werkstück muss daher andauernd ausgetauscht werden. Es sind Verfahren zur elektrochemischen Bearbeitung bekannt, bei denen der Elektrolyt seitlich zugegeben wird und durch den Spalt zwischen Elektrode und Werkstück von einer Seite zur anderen strömt. Es sind auch Elektroden mit einem Zuführkanal bekannt, wobei der Elektrolyt durch den Zuführkanal im Spalt mittig zwischen Elektrode und Werkstück zugeführt wird und im Spalt von Innen nach Außen strömt. Mit zunehmender Wegstrecke des Elektrolyten im Spalt zwischen Elektrode und Werkstück nimmt die Verschmutzung des Elektrolyten durch den Abtrag zu und die elektrische Leitfähigkeit und der PH-Wert des Elektrolyten ändern sich.

Aufgabe der Erfindung ist es, eine Elektrode und ein Verfahren zur elektrochemischen Bearbeitung mit einem verbesserten Elektrolytaustausch im Spalt zwischen Elektrode und Werkstück zu schaffen.

Die der Erfindung zugrunde liegende Aufgabe wird durch eine Elektrode zur elektrochemischen Bearbeitung eines Werkstücks mit den Merkmalen des Anspruchs 1 welche in einer Zustellrichtung gegen das zu bearbeitende Werkstück zugestellt werden kann. Die Elektrode umfasst eine unter elektrische Spannung zu setzende, elektrisch leitfähige Bearbeitungsfläche, eine Mehrzahl von Zuführkanälen für eine Elektrolytzufuhr sowie eine Mehrzahl von Rückführkanälen für eine Elektrolytrückfuhr. Die Zuführkanäle und Rückführkanäle sind vorzugsweise zylinderförmig und verlaufen im Wesentlichen parallel zueinander und parallel zur Zustellrichtung. Jeder Zuführkanal und jeder Rückführkanal weist eine Mündungsöffnung in der Bearbeitungsfläche mit einem Öffnungsquerschnitt auf. Jeweils mindestens ein Zuführkanal und ein Rückführkanal liegen direkt benachbart. Auf diese Weise erfolgt der Austausch des Elektrolyten über die direkt in der Elektrode vorgesehenen Zuführ- und Rückführkanäle, die direkt in die Bearbeitungsfläche der Elektrode münden. Auf diese Weise ist die Wegstrecke im Spalt zwischen Elektrode und Werkstück kürzer, da der Elektrolyt nur vom Zuführkanal zum benachbarten Rückführkanal und nicht zum Rand des Spaltes zwischen Elektrode und Werkstück fließen muss. Durch die Mehrzahl der Zuführ- und Rückführkanäle findet über die gesamte Bearbeitungsfläche der Elektrode ein gleichmäßiger Austausch von Elektrolyt statt.

Gemäß einer Ausführungsform ist die Elektrode langgestreckt und hat eine Haupterstreckungsrichtung, die vorzugsweise der Zustellrichtung entspricht. Da die Elektrode vorteilhaft entlang ihrer langgestreckten Haupterstreckungsrichtung bewegt werden kann, wird eine solche Bauweise insbesondere für das elektrochemische Senken bevorzugt.

Die Zuführ- und Rückführkanäle sind durch Zwischenwände getrennt, die im Bereich benachbarter Mündungsöffnungen die elektrisch leitfähige Bearbeitungsfläche bilden.

Dies ermöglicht eine einfache gemeinsame Ausführung der Kanäle und der Bearbeitungsfläche der Elektrode.

Die Zwischenwände weisen, im Querschnitt senkrecht zur Zustellrichtung gesehen, beispielsweise eine gleichmäßige Dicke auf. Somit wird einerseits eine im Wesentlichen zylindrische Form der gesamten Elektrode und andererseits eine gleichmäßige Verteilung der Kanäle ermöglicht.

Vorzugsweise ist die Dicke der Zwischenwände geringer als die größte Breite der benachbarten Kanäle. Die Elektrode kann somit von ihrer Bauweise aus als Bündel von nebeneinander angeordneten Kanälen betrachtet werden, wodurch eine leichte, materialeinsparende Bauweise ermöglicht wird.

Beispielsweise ist die Dicke der Zwischenwände wenigstens um den Faktor 3, vorzugsweise den Faktor 5 geringer als die größte Breite der benachbarten Kanäle. Auf diese Weise wird ein großer Volumenfluss des Elektrolyts ermöglicht.

Die Zwischenwände im Bereich der Mündungsöffnungen weisen seitliche Fortsätze auf, welche die elektrisch leitfähige Bearbeitungsfläche vergrößern. Dies ermöglicht einerseits einen hohen Volumenstrom von Elektrolyt durch die Kanäle und andererseits eine Verbesserung der Funktion der Elektrode bei der elektrochemischen Bearbeitung durch die Vergrößerung der Bearbeitungsfläche.

Gemäß einer bevorzugten Ausführungsform ist das Verhältnis von Öffnungsquerschnitt zu Bearbeitungsfläche größer 0,4, vorzugsweise zwischen 0,4 und 0,8. Ein größeres Verhältnis entspricht einem verbesserten Elektrolytaustausch durch Vergrößerung der Öffnungsquerschnitte der Zuführ- und Rückführkanäle relativ zur Bearbeitungsfläche der Elektrode.

Die Zuführkanäle und Rückführkanäle können jeweils in Sammelkanäle münden. Auf diese Weise ist eine einfache Versorgung der Mehrzahl von Zuführ- und Rückführkanälen möglich. Vorzugsweise sind die Seitenflächen der Elektrode elektrisch isolierend beschichtet. Somit wird ein elektrischer Kurzschluss zwischen Elektrode und Werkstück durch eine Berührung von Werkstück und Elektrode an der Seitenfläche verhindert.

Der Querschnitt der Zuführ- und Rückführkanäle kann zwischen 0,01 mm² und 20 mm² liegen. Dies ermöglicht verschiedene Ausführungsformen, die insbesondere an die gewünschte Form der Bearbeitungsfläche der Elektrode angepasst werden kann.

Es ist möglich, dass der Querschnitt der Zuführ- und Rückführkanäle rechteckig, sechseckig, achteckig, beliebig polygonal oder rund ist. Die Geometrie der Zuführ- und Rückführkanäle kann somit optimal an die Geometrie der gewünschten Bearbeitungsfläche der Elektrode angepasst werden.

Der Elektrodenwerkstoff kann Edelstahl, Bronze oder Wolframkupfer sein.

Gemäß einer bevorzugten Ausführungsform wird die Elektrode durch ein generatives Verfahren, insbesondere Lasersintern, hergestellt. Dies ermöglicht insbesondere komplexe Geometrien und kleine Durchmesser der Zuführ- und Rückführkanäle der Elektrode.

Es ist möglich, dass die Bearbeitungsfläche quer zur Zustellrichtung oszillierend bewegt wird. Auf diese Weise können eventuell auftretende Unebenheiten in der Abtragfläche des Werkstücks im Bereich der Mündungsöffnungen der Zuführ- und Rückführkanäle ausgeglichen werden.

Vorzugsweise entspricht die Amplitude der oszillierenden Bewegung der Bearbeitungsfläche mindestens der Hälfte der in Richtung der oszillierenden Bewegung größten Breite der Mündungsöffnung des Zuführ- oder Rückführkanals. Auf diese Weise wird die gesamte Abtragfläche des Werkstücks während einer Periode der oszillierenden Bewegung von der elektrisch leitfähigen Bearbeitungsfläche überstrichen.

Die oszillierende Bewegung der Bearbeitungsfläche kann in einer Richtung senkrecht zur Zustellrichtung durchgeführt werden. Auf diese Weise kann die Position der Elektrode in Zustellrichtung während der oszillierenden Bewegung konstant bleiben oder sie kann unabhängig von der oszillierenden Bewegung der Bearbeitungsfläche geändert werden.

Vorzugsweise wird die oszillierende Bewegung der Bearbeitungsfläche in einer Tangentialebene der Bearbeitungsfläche, vorzugsweise in einer Richtung senkrecht zu allen Flächennormalen der Bearbeitungsfläche, durchgeführt. Dies ermöglicht eine oszillierende Bewegung der Bearbeitungsfläche auch bei komplexeren Geometrien der Bearbeitungsfläche.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Ansicht einer Elektrode gemäß einer ersten Ausführungsform der Erfindung;
- Figur 2 eine Schnittansicht der Elektrode aus Figur 1 entlang einer Schnittebene senkrecht zur Zustellrichtung;
- Figur 3 eine perspektivische Ansicht einer Elektrode gemäß einer zweiten Ausführungsform der Erfindung mit rechteckigen Kanälen; und
- Figur 4 eine Detailansicht der Elektrode aus Figur 3.

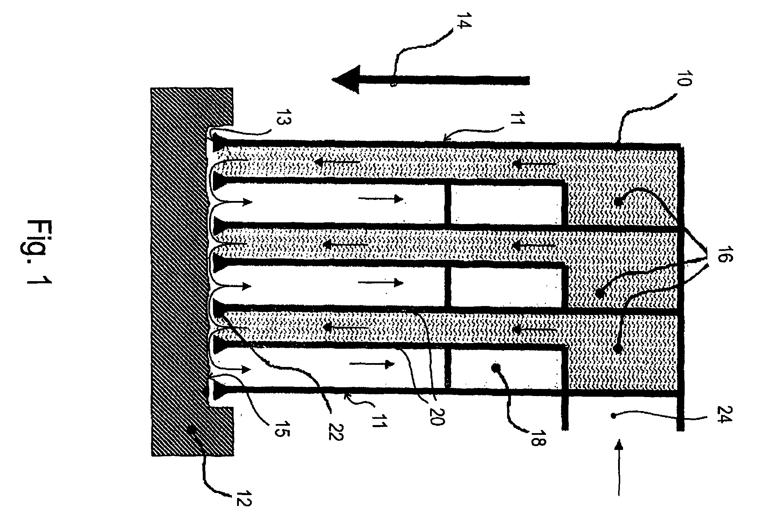

Eine erste Ausführungsform einer Elektrode 10 zur elektrochemischen Bearbeitung eines Werkstücks 12 ist in Figur 1 gezeigt. Beim elektrochemischen Bearbeiten sind Elektrode 10 und Werkstück 12 gegensätzlich gepolt. Eine elektrisch leitfähige Bearbeitungsfläche 13 der Elektrode 10 ist dem Werkstück 12 in einer Zustellrichtung 14 bis auf einen geringen Spalt zwischen der Bearbeitungsfläche 13 der Elektrode 10 und einer Abtragfläche 15 des Werkstücks 12 angenähert.

Die äußeren Seitenflächen 11 der Elektrode 10 dienen nicht zur elektrochemischen Bearbeitung des Werkstücks 12 und sind elektrisch isolierend beschichtet, um einen Kurzschluss bei einer Berührung zwischen Werkstück 12 und den Seitenflächen 11 der Elektrode 10 zu verhindern.

Die Elektrode 10 ist aus einer Mehrzahl von Zuführkanälen 16 und Rückführkanälen 18 gebildet. Die Zuführ- und Rückführkanäle 16, 18 verlaufen im Wesentlichen parallel zueinander und parallel zur Zustellrichtung 14. Die Zuführ- und Rückführkanäle 16, 18 sind durch Zwischenwände 20 getrennt, wobei die Zuführ- und Rückführkanäle 16, 18 so in der Elektrode 10 angeordnet sind, dass jeweils mindestens ein Zuführkanal 16 und ein Rückführkanal 18 direkt benachbart liegen. Die Querschnitte der Zuführ- und Rückführkanäle 16, 18 liegen zwischen 0,01 mm² und 20 mm².

Die Zuführkanäle 16 und Rückführkanäle 18 sind zylinderförmig, wodurch es möglich ist, die Zuführ- und Rückführkanäle 16, 18 auf einfache Weise parallel zueinander anzuordnen, wobei die Bauweise der Elektrode 10 einer Art Rohrbündel gleicht. Die Elektrode 10 ist langgestreckt ausgebildet, wobei die Haupterstreckungsrichtung der Elektrode 10 der Zustellrichtung 14 entspricht.

Die Zuführkanäle 16 und die Rückführkanäle 18 weisen jeweils eine Mündungsöffnung in der Bearbeitungsfläche 13 auf. Die Bearbeitungsfläche 13 wird dabei im Wesentlichen von den Zwischenwänden 20 der Zuführ- und Rückführkanäle 16, 18 gebildet. Um die elektrisch leitfähige Bearbeitungsfläche 13 zu vergrößern, sind im Bereich der Mündungsöffnungen an den Zwischenwänden 20 Fortsätze 22 vorgesehen.

Die Öffnungsquerschnitte der Mündungsöffnungen der Zuführ- und Rückführkanäle 16, 18 sind so gewählt, dass das Verhältnis von Öffnungsquerschnitt zur Bearbeitungsfläche 13 größer 0,4 und vorzugsweise zwischen 0,4 und 0,8 ist.

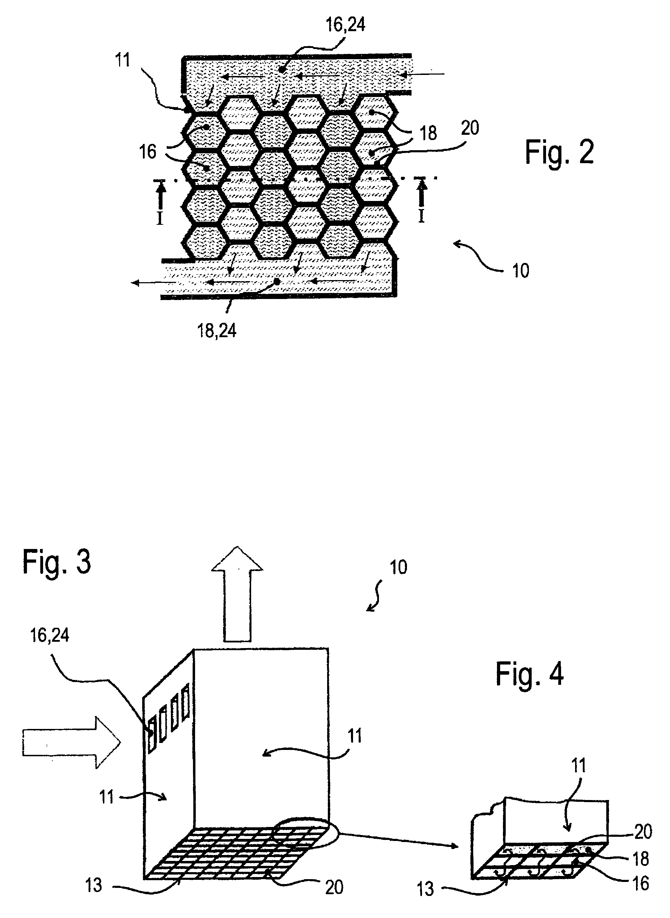

Figur 2 zeigt eine schematische Schnittansicht der Elektrode 10 aus Figur 1 in einer Schnittebene senkrecht zur Zustellrichtung 14. In der gezeigten Ausführungsform sind die Zuführ- und Rückführkanäle 16, 18 sechseckig ausgeführt, wobei jeweils eine vertikale Reihe als Zuführkanäle 16 vorgesehen sind und die benachbarte vertikale Reihe als Rückführkanäle 18 vorgesehen sind. Die Zuführkanäle 16 sind dunkel schraffiert gezeigt, während die Rückführkanäle 18 hell schraffiert gezeigt sind. Figur 1 zeigt die Schnittansicht der Elektrode 10 entlang der Linie I-I.

Wie in Figur 2 gut zu erkennen, weisen die Zwischenwände 20, im Querschnitt senkrecht zur Zustellrichtung gesehen, eine gleichmäßige Dicke auf. Die Dicke der Zwischenwände 20 ist geringer als die größte Breite der benachbarten Kanäle 16, 18, wobei die Dicke der Zwischenwände 20 wenigstens um den Faktor 3 und vorzugsweise den Faktor 5 geringer ist als die größte Breite der benachbarten Kanäle 16, 18.

Es ist natürlich auch möglich, dass eine andere Geometrie für den Querschnitt der Zuführ- und Rückführkanäle 16, 18 vorgesehen ist. Die Zuführ- und Rückführkanäle 16, 18 können beispielsweise rechteckig, achteckig oder beliebig polygonal oder rund sein.

Die Zuführkanäle 16 und Rückführkanäle 18 münden jeweils in einen Sammelkanal 24, wodurch ein einfacher, seitlicher Anschluss der Elektrode 10 an eine Elektrolytversorgung möglich ist.

Eine zweite Ausführungsform einer erfindungsgemäßen Elektrode 10 ist in Figur 3 und Figur 4 gezeigt. Die Zuführkanäle 16 und Rückführkanäle 18 sind im Querschnitt rechteckig, im Wesentlichen quadratisch, ausgebildet. Wie in der Detailansicht in Figur 4 anhand von Pfeilen, die die Flussrichtung des Elektrolyts anzeigen, zu erkennen ist, sind die Zuführ- und Rückführkanäle 16, 18 jeweils in horizontalen Reihen angeordnet.

Die Elektrolytzufuhr erfolgt dabei über mehrere Sammelkanäle 24, die jeweils eine Öffnung in der Seitenfläche 11 der Elektrode 10 aufweisen und jeweils einer horizontalen Reihe von Zuführkanälen 16 zugeordnet sind. Die Rückführung des Elektrolyts erfolgt über einen Sammelkanal an der, der Bearbeitungsfläche 13 gegenüberliegenden Stirnseite der Elektrode 10. Es ist hierbei auch möglich, die Zuführ- und Rückführkanäle 16, 18 in einem anderen Muster anzuordnen, beispielsweise in Form eines Schachbrettmusters.

Der Elektrodenwerkstoff der Elektrode 10 ist Edelstahl, Bronze oder Wolframkupfer. Die Elektrode 10 wird vorzugsweise durch ein generatives Verfahren, beispielsweise Lasersintern, hergestellt. Auf diese Weise können auch komplexe Geometrien der Zuführ- und Rückführkanäle 16, 18 realisiert werden.

Ein Verfahren zum elektrochemischen Bearbeiten eines Werkstücks 12 mit einer oben beschriebenen Elektrode 10 wird im Folgenden anhand der Figuren 1 bis 4 beschrieben.

Im folgenden wird ein Verfahren zum elektrochemischen Senken beschrieben, wobei das Verfahren auch für andere Bearbeitungsweisen des elektrochemischen Bearbeitens anwendbar ist.

Die Elektrode 10 und das Werkstück 12 werden gegensätzlich gepolt, wobei die Elektrode 10 bevorzugt als Katode und das Werkstück 12 als Anode geschaltet wird. Die Elektrode 10 wird in der Zustellrichtung 14 gegen das Werkstück 12 zugestellt, ohne das Werkstück zu kontaktieren. Dabei bildet sich zwischen der elektrisch leitfähigen, unter elektrische Spannung gesetzten Bearbeitungsfläche 13 und der Abtragfläche 15 des Werkstücks 12 ein stetiger Arbeitsspalt.

Über die Zuführkanäle 16 wird der Bearbeitungsfläche 13 frischer Elektrolyt zugeführt, und über die Rückführkanäle 18 wird der verbrauchte Elektrolyt, welcher beispielsweise mit Metallionen verunreinigt ist, von der Bearbeitungsfläche 13 rückgeführt. Auf diese Weise hat der Elektrolyt nur eine kurze Wegstrecke zwischen den Mündungsöffnungen benachbarter Zuführ- und Rückführkanälen 16, 18 im Arbeitsspalt zu überwinden, und durch die Mehrzahl der Zuführ- und Rückführkanälen 16, 18 ist ein gleichmäßiger Elektrolytaustausch über die gesamte Bearbeitungsfläche 13 möglich. Die Strömungsrichtung des Elektrolyten ist in den Figuren 1 bis 4 durch Pfeile gekennzeichnet.

Durch das elektrochemische Abtragen von Material auf der Abtragfläche 15 des Werkstücks 12 wird der Arbeitsspalt zwischen Elektrode 10 und Werkstück 12 vergrößert. Die Elektrode 10 wird daraufhin in Zustellrichtung gegen das Werkstück 12 weiter zugestellt, bis die gewünschte Form des Werkstücks 12 erreicht ist.

Während des elektrochemischen Bearbeitens wird die Bearbeitungsfläche 13 quer zur Zustellrichtung oszillierend bewegt. Auf diese Weise können Unebenheiten in der Abtragfläche 15 ausgeglichen werden, die ohne eine solche Bewegung beispielsweise durch die Anordnung der Mündungsöffnungen der Zuführ- und Rückführkanäle 16, 18 in der Bearbeitungsfläche 13 entstehen können.

Die Amplitude der oszillierenden Bewegung der Bearbeitungsfläche 13 entspricht mindestens der Hälfte der in Richtung der oszillierenden Bewegung größten Breite der Mündungsöffnungen der Zuführ- oder Rückführkanäle 16, 18. Auf diese Weise wird die gesamte Abtragfläche während einer Periode der oszillierenden Bewegung von der elektrisch leitfähigen Bearbeitungsfläche 13 überdeckt. Vorzugsweise ist die Verweildauer der elektrisch leitfähigen Bearbeitungsfläche 13 über allen Punkten der Abtragfläche 15 im zeitlichen Mittel gleich.

Die Richtung der oszillierenden Bewegung der Bearbeitungsfläche 13 ist senkrecht zur Zustellrichtung, wodurch die Elektrode 10 während der oszillierenden Bewegung nicht in der Zustellrichtung verstellt werden muss.

Die in den Figuren 1 bis 4 gezeigte Bearbeitungsfläche 13 ist im Wesentlichen als Ebene ausgebildet. Es ist aber auch möglich, dass die Bearbeitungsfläche 13 eine komplexere Geometrie aufweist, beispielsweise in Form einer Welle. In diesem Fall wird die oszillierende Bewegung in einer Tangentialebene der Bearbeitungsfläche 13 durchgeführt und vorzugsweise in einer Richtung senkrecht zu allen Flächennormalen der Bearbeitungsfläche 13. Bei einer wellenförmigen Bearbeitungsfläche 13 erfolgt die oszillierende Bewegung also entlang des Wellenkamms, beziehungsweise Wellentals.

## Patentansprüche

1. Elektrode (10) zur elektrochemischen Bearbeitung eines Werkstücks (12),
- welche in einer Zustellrichtung (14) gegen das zu bearbeitende Werkstück (12) zugestellt werden kann,
- mit einer unter elektrische Spannung zu setzenden, elektrisch leitfähigen Bearbeitungsfläche (13),
- einer Mehrzahl von Zuführkanälen (16) für eine Elektrolytzufuhr sowie einer Mehrzahl von Rückführkanälen (18) für eine Elektrolytrückfuhr,
- wobei die Zuführkanäle (16) und Rückführkanäle (18) im Wesentlichen parallel zueinander und parallel zur Zustellrichtung (14) verlaufen,
- und wobei jeder Zuführkanal (16) und jeder Rückführkanal (18) eine Mündungsöffnung in der Bearbeitungsfläche (13) mit einem Öffnungsquerschnitt aufweist
- und jeweils mindestens ein Zuführkanal (16) und ein Rückführkanal (18) direkt benachbart liegen, dadurch dass die Bearbeitungsfläche (13) im Wesentlichen von den Zwischenwänden (29) der Zuführ- und Rückführkanäle gebildet wird, wobei die Zwischenwände (20) im Bereich der Mündungsöffnungen Fortsätze (22) aufweisen, welche die elektrisch leitfähige Bearbeitungsfläche (13) vergrößern und dass die Zuführkanäle (16) und Rückführkanäle (18) jeweils in Sammelkanälen (24) münden.

2. Elektrode nach Anspruch 1, **dadurch gekennzeichnet, dass** die Elektrode (10) langgestreckt ist und eine Haupterstreckungsrichtung hat, die vorzugsweise der Zustellrichtung (14) entspricht.

3. Elektrode nach Anspruch 2 **dadurch gekennzeichnet, dass** die Zwischenwände (20), im Querschnitt senkrecht zur Zustellrichtung (14) gesehen, eine gleichmäßige Dicke aufweisen.

4. Elektrode nach Anspruch 2 oder 3 **dadurch gekennzeichnet, dass** die Dicke der Zwischenwände (20) geringer als die größte Breite der benachbarten Kanäle (16, 18) ist.

5. Elektrode nach Anspruch 4 **dadurch gekennzeichnet, dass** die Dicke der Zwischenwände (20) wenigstens um den Faktor 3, vorzugsweise den Faktor 5 geringer als die größte Breite der benachbarten Kanäle (16, 18) ist.

6. Elektrode nach einem der vorhergehenden Ansprüche, **dadurch gekennzeichnet, dass** das Verhältnis von Öffnungsquerschnitt zu Bearbeitungsfläche (13) größer 0,4 vorzugsweise zwischen 0,4 und 0,8 ist.

7. Elektrode nach einem der vorhergehenden Ansprüche, **dadurch gekennzeichnet, dass** die Seitenflächen (11) der Elektrode (10) elektrisch isolierend beschichtet sind.

8. Elektrode nach einem der vorhergehenden Ansprüche, **dadurch gekennzeichnet, dass** der Querschnitt der Zuführ- und Rückführkanäle (16, 18) zwischen 0,01 mm² und 20 mm² liegt

9. Elektrode nach einem der vorhergehenden Ansprüche, **dadurch gekennzeichnet, dass** der Querschnitt der Zuführ- und Rückführkanäle (16, 18) rechteckig, sechseckig, achteckig, beliebig polygonal oder rund ist.

10. Elektrode nach einem der vorhergehenden Ansprüche, **dadurch gekennzeichnet, dass** der Elektrodenwerkstoff Edelstahl, Bronze oder Wolframkupfer ist.

11. Elektrode nach einem der vorhergehenden Ansprüche, **dadurch gekennzeichnet, dass** die Elektrode (10) durch ein generatives Verfahren, insbesondere Lasersintern, hergestellt wird.

## Claims

1. An electrode (10) for electrochemically machining a workpiece (12),
- which can be fed in a feeding direction (14) against the workpiece (12) to be machined,
- having an electrically conductive machining surface (13) to which an electric voltage can be applied,
- a plurality of supply channels (16) for supplying an electrolyte as well as a plurality of return channels (18) for returning an electrolyte,
- wherein the supply channels (16) and the return channels (18) extend substantially parallel to each other and parallel to the feeding direction (14),
- and wherein each supply channel (16) and each return channel (18) has a discharge opening in the machining surface (13) with an opening cross-section,
- and wherein in each case at least one supply channel (16) and one return channel (18) are directly adjacent to each other, as a result of the fact that the machining surface (13) is substantially formed by the intermediate walls (29) of the supply and return channels, wherein the intermediate walls (20) have extensions (22) in the area of the discharge openings, which enlarge the electrically conductive machining surface (13), and in that the supply channels (16) and the return channels (18) each open into collecting channels (24).

2. The electrode as claimed in claim 1, **characterized in that** the electrode (10) is elongate and has a main extension direction that preferably corresponds to the feeding direction (24).

3. The electrode as claimed in claim 2, **characterized in that** the intermediate walls (20) have a regular thickness if viewed in the cross section perpendicularly to the feeding direction (14).

4. The electrode as claimed in claim 2 or 3, **characterized in that** the thickness of the intermediate walls (20) is less than the greatest width of the adjacent channels (16, 18).

5. The electrode as claimed in claim 4, **characterized in that** the thickness of the intermediate walls (20) is lower than the greatest width of the adjacent channels (16, 18) by at least a factor of 3, preferably a factor of 5.

6. The electrode as claimed in any one of the preceding claims, **characterized in that** the ratio between the opening cross section and the machining surface (13) is greater than 0.4, preferably between 0.4 and 0.8.

7. The electrode as claimed in any one of the preceding claims, **characterized in that** the lateral surfaces (11) of the electrode (10) are coated so as to be electrically insulating.

8. The electrode als claimed in any one of the preceding claims, **characterized in that** the cross section of the supply and the return channels (16, 18) is between 0.01 mm² and 20 mm².

9. The electrode as claimed in any one of the preceding claims, **characterized in that** the cross section of the supply and return channels (16, 18) is rectangular, hexagonal, octagonal, polygonal as desired, or round.

10. The electrode as claimed in any one of the preceding claims, **characterized in that** the electrode material is stainless steel, bronze, or tungsten copper.

11. The electrode as claimed in any one of the preceding claims, **characterized in that** the electrode (10) is produced using a generative method, in particular laser sintering.

## Revendications

1. Électrode (10) d'usinage électrochimique d'une pièce (12)
- qui peut être approchée dans un sens de passe (14) contre la pièce à usiner (12)
- comportant une surface d'usinage (13) conductrice d'électricité à mettre sous tension électrique,
- une pluralité de canaux d'acheminement (16) pour l'apport d'électrolyte ainsi qu'une pluralité de canaux d'évacuation (18) pour l'évacuation de l'électrolyte,
- les canaux d'acheminement (16) et les canaux d'évacuation (18) s'étendant sensiblement parallèlement les uns aux autres et parallèlement au sens de passe (14),
- et chaque canal d'acheminement (16) et chaque canal d'évacuation (18) présentant dans la surface d'usinage (13) un orifice d'embouchure doté d'une section transversale d'ouverture
- et respectivement au moins un canal d'cheminement (16) et un canal d'évacuation (18) étant directement adjacents, **caractérisée en ce que** la surface d'usinage (13) est sensiblement constituée par des parois intermédiaires (29) des canaux d'acheminement et d'évacuation, les parois intermédiaires (20) présentant, au niveau des orifices d'embouchure, des prolongements (22) qui agrandissent la surface d'usinage (13) conductrice d'électricité et **en ce que** les canaux d'acheminement (16) et les canaux d'évacuation (18) débouchent respectivement dans des canaux collecteurs (24).

2. Électrode selon la revendication 1, **caractérisée en ce que** l'électrode est étirée en longueur et a un sens d'étirement principal qui correspond de préférence au sens de passe (14).

3. Électrode selon la revendication 2, **caractérisée en ce que** les parois intermédiaires (20), vues en section transversale perpendiculairement au sens de passe (14), présentent une épaisseur homogène.

4. Électrode selon la revendication 2 ou 3, **caractérisée en ce que** l'épaisseur des parois intermédiaires (20) est inférieure à la plus grande largeur des canaux voisins (16, 18).

5. Électrode selon la revendication 4, **caractérisée en ce que** l'épaisseur des parois intermédiaires (20) est inférieure d'un facteur 3, de préférence d'un facteur 5, à la plus grande largeur des canaux voisins (16, 18) .

6. Électrode selon une des revendications précédentes, **caractérisée en ce que** le rapport entre la section transversale d'ouverture et la surface d'usinage (13) est supérieur à 0,4 et se situe de préférence entre 0,4 et 0,8.

7. Électrode selon une des revendications précédentes, **caractérisée en ce que** les surfaces latérales (11) de l'électrode (10) sont revêtues d'une isolation électrique.

8. Électrode selon une des revendications précédentes, **caractérisée en ce que** la section transversale des canaux d'acheminement et d'évacuation (16, 18) mesure de 0,01 mm² à 20 mm².

9. Électrode selon une des revendications précédentes, **caractérisée en ce que** la section transversale des canaux d'acheminement et d'évacuation (16, 18) est rectangulaire, hexagonale, octogonale, de n'importe quelle forme polygonale ou ronde.

10. Électrode selon une des revendications précédentes, **caractérisée en ce que** le matériau de l'électrode est de l'acier inoxydable, du bronze ou du cuivre tungstène.

11. Électrode selon une des revendications précédentes, **caractérisée en ce que** l'électrode (10) est fabriquée par un procécé génératif, en particulier par frittage au laser.
